(19) Europäisches Patentamt
European Patent Office
Office européen des brevets

(11) EP 1 672 116 A1

(12) # EUROPÄISCHE PATENTANMELDUNG

(43) Veröffentlichungstag:
**21.06.2006 Patentblatt 2006/25**

(21) Anmeldenummer: **04029751.7**

(22) Anmeldetag: **16.12.2004**

(51) Int Cl.:
***D06M 13/432*** *(2006.01)* ***D06M 13/453*** *(2006.01)*
***D06M 11/66*** *(2006.01)* ***D06M 11/55*** *(2006.01)*
***D06M 11/56*** *(2006.01)* ***C09K 21/00*** *(2006.01)*

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Ciba Spezialitätenchemie Pfersee GmbH**
**86462 Langweid a.L. (DE)**

(72) Erfinder:
- **Dermeik, Salman, Dr.**
  **86157 Augsburg (DE)**
- **Lüdemann, Simpert**
  **86399 Bobingen (DE)**

(54) **Zusammensetzungen für die flammhemmende Ausrüstung von Fasermaterialien**

(57) Zusammensetzungen, welche sich nach einem speziellen Verfahren aus Wasser, Guanidinphosphat, Amidosulfonsäure bzw. Ammoniumsulfamat und Ammoniumsulfat erhalten lassen, werden beschrieben. Die Zusammensetzungen eignen sich für die flammhemmende Ausrüstung von Fasermaterialien, insbesondere von textilen Flächengebilden, z.B. solchen aus Polyester.

EP 1 672 116 A1

## Beschreibung

Die Erfindung betrifft wässrige Zusammensetzungen, welche nach einem bestimmten Verfahren aus Wasser, Guanidinphosphat, Amidosulfonsäure und Ammoniumsulfat hergestellt werden können, wobei an Stelle von Amidosulfonsäure auch Ammoniumsulfamat verwendet werden kann. Sie betrifft ferner die Verwendung der Zusammensetzungen zur Behandlung von Fasermaterialien.

Es ist bekannt, verschiedene Materialien, darunter textile Flächengebilde, flammhemmend auszurüsten, indem man stickstoff- und/oder phosphorhaltige Produkte auf sie aufbringt.
So beschreibt z.B. die US 5 418 282 Kunststoffschäume und Platten aus Holzpartikeln, welche flammhemmend ausgerüstet sind. Zu diesem Zweck werden bei der Herstellung dieser Artikel Zusammensetzungen in Teilchenform zugemischt, welche beispielsweise Ammoniumphosphat, Borsäure und Ammoniumborat enthalten.
Aus der US 2 935 471 gehen Zusammensetzungen hervor, welche eine Borverbindung und ein anorganisches Ammoniumsalz enthalten. Die Zusammensetzungen werden für die flammhemmende Ausrüstung von Cellulosematerialien verwendet.
Die GB Patent Specification 1 174 866 beschreibt wässrige Lösungen, mittels derer Cellulose enthaltende Fasermaterialien flammhemmend ausgerüstet werden können. Die wässrigen Lösungen enthalten eine oder mehrere der Verbindungen Ammoniumsulfat, Ammoniumsulfamat oder Ammoniumimidosulfonat.
Der US 4 448 841 ist zu entnehmen, dass Textilien flammhemmend ausgerüstet werden können, indem man sie mit wässrigen Zusammensetzungen behandelt, welche Ammoniumsalze, z.B. Ammoniumsulfat, Ammoniumphosphat oder Ammoniumsulfamat enthalten.

Die aus dem Stand der Technik bekannten wässrigen Zusammensetzungen für die flammhemmende Ausrüstung von textilen Flächengebilden besitzen keine optimalen Eigenschaften, was ihre Stabilität und/oder die Eigenschaften der damit ausgerüsteten Fasermaterialien betrifft. Insbesondere bei Textilien aus Polyester werden mit bekannten Zusammensetzungen nicht optimale Resultate erhalten.

Die Aufgabe, welche der vorliegenden Erfindung zugrunde lag, bestand darin, Zusammensetzungen zu entwickeln, mit denen sich Fasermaterialien in Form von textilen Flächengebilden flammhemmend ausrüsten lassen und wobei diese Flächengebilde ausgezeichnete flammhemmende Eigenschaften aufweisen, und wobei diese Zusammensetzungen besonders gut für die flammhemmende Ausrüstung von Fasermaterialien aus Polyester geeignet sind.

Die Aufgabe wurde gelöst durch eine wässrige Zusammensetzung, die herstellbar ist durch folgende, nacheinander ablaufende, Verfahrensschritte

a) Herstellen einer Mischung aus Wasser und Guanidinphosphat, wobei die Mengenverhältnisse so gewählt werden, dass die Mischung einen Phosphorgehalt im Bereich von 4,0 bis 6,5 Gew% besitzt.

b) Gegebenenfalls Einstellen des pH-Werts der Mischung auf einen Wert im Bereich von 4,5 bis 6,5 bei 20°C.

c) Hinzufügen von Ammoniumsulfamat oder Amidosulfonsäure in einer solchen Menge, dass pro 100 g der nach Schritt b) erhaltenen Mischung 8 bis 12 g Amidosulfonsäure oder 9,5 bis 15 g Ammoniumsulfamat verwendet werden, oder Hinzufügen einer Mischung dieser beiden Produkte.

d) Gegebenenfalls Einstellen des pH-Werts der erhaltenen Mischung auf einen Wert im Bereich von 4,5 bis 6,5 bei 20°C.

e) Hinzufügen von Ammoniumsulfat in einer solchen Menge, dass pro 100 g der nach Schritt d) erhaltenen Mischung 20 bis 40 g Ammoniumsulfat verwendet werden.

Werden mit den erfindungsgemäßen wässrigen Zusammensetzungen Fasermaterialien ausgerüstet, so lassen sich hocheffektive flammhemmende Eigenschaften erzielen. Die Fasermaterialien sind vorzugsweise textile Flächengebilde in Form von Geweben, Maschenware (Strickware) oder Vliesen (non-wovens). Insbesondere auch bei Textilien aus Polyesterfasern lässt sich eine hocheffektive flammhemmende Ausrüstung erzielen, während viele aus dem Stand der Technik bekannte Zusammensetzungen für Polyester nicht oder nicht genügend geeignet sind.
Als Polyesterfasern kommen insbesondere Fasern aus Polyethylenterephthalat in Betracht; jedoch sind erfindungsgemäße Zusammensetzungen auch für Textilien aus anderen Polyesterfasern geeignet.
Mit erfindungsgemäßen Zusammensetzungen können daneben auch Textilien aus Cellulosefasern oder aus Mischungen von Cellulosefasern und Polyesterfasern wirkungsvoll flammhemmend ausgerüstet werden.

Die Behandlung der Fasermaterialien mit erfindungsgemäßen Zusammensetzungen kann mit Vorrichtungen und nach Methoden erfolgen, wie sie dem Textilausrüster bekannt sind. Geeignet ist beispielsweise eine Applikation mittels Foulard und anschließende Trocknung, z.B. bei 100 bis 130°C. An die Trocknung kann sich gegebenenfalls noch eine Kondensation, z.B. im Temperaturbereich von 130 bis 180°C anschließen.

Erfindungsgemäße Zusammensetzungen lassen sich durch die oben genannten Verfahrensschritte herstellen. Diese werden nun im einzelnen beschrieben.

Schritt a):

Bei diesem Verfahrensschritt wird eine Mischung aus Wasser und Guanidinphosphat hergestellt. Es kann hierfür sekundäres Guanidinphosphat verwendet werden, das aus 2 Mol Guanidin und 1 Mol Orthophosphorsäure gebildet wird, oder primäres Guanidinphosphat, das aus 1 Mol Guanidin und 1 Mol Orthophosphorsäure entsteht. Selbstverständlich lässt sich auch ein Gemisch aus primären und sekundärem Guanidinphosphat verwenden.

Die Herstellung der Mischung in Schritt a) kann gegebenenfalls bei erhöhter Temperatur z.B. im Bereich von 30°C bis 70°C, und unter Rühren erfolgen.

In Schritt a) sind die Mengenverhältnisse von Wasser und Guanidinphosphat so zu wählen, dass die erhaltene Mischung einen Phosphorgehalt (berechnet als P) im Bereich von 4,0 bis 6,5 Gew% besitzt. Es kann beispielsweise eine Mischung hergestellt werden, die 35 Gew% sekundäres Guanidinphosphat enthält.

Schritt b):

Wenn die nach Schritt a) erhaltene Mischung einen pH-Wert bei 20°C im Bereich von 4,5 bis 6,5 besitzt, so wird Schritt b) nicht durchgeführt. Wenn dagegen der pH-Wert der Mischung nach Durchführung von Schritt a) außerhalb des genannten Bereichs liegt, so muß Schritt b) durchgeführt werden. Dieser Schritt besteht darin, den pH-Wert auf einen Wert innerhalb des genannten Bereichs einzustellen.

Gut geeignet für diese Einstellung des pH-Werts ist Orthophosphorsäure, wenn der pH-Wert der Mischung nach Durchführung von Schritt a) höher ist als 6,5. Die Orthophosphorsäure kann hierzu beispielsweise als 50 bis 90 %ige wässrige Lösung eingesetzt werden.

Schritt c):

Der nach Durchführung von Schritt a) und gegebenenfalls Schritt b) erhaltenen Mischung werden pro 100 g der Mischung in Schritt c) 8 bis 12 g Amidosulfonsäure $H_2N\text{-}SO_3H$ oder 9,5 bis 15 g Ammoniumsulfamat $NH_4^{\oplus}H_2N\text{-}SO_3^{\ominus}$ hinzugefügt. Es kann auch ein Gemisch dieser beiden Produkte hinzugefügt werden. In diesem Fall wird eine Menge dieses Gemischs verwendet, die

$$\frac{x}{100} * (8 \text{ bis } 12)\text{ g}$$ und

$$\frac{y}{100} * (9{,}5 \text{ bis } 15)\text{ g}$$ Ammoniumsulfamat enthält.

Hierbei gibt x an, wie viel Gew% an Amidosulfonsäure das Gemisch enthält, und y gibt an, wie viel Gew% an Ammoniumsulfamat das Gemisch enthält. Alle genannten Mengen an Amidosulfonsäure bzw. Ammoniumsulfamat beziehen sich auf feste, wasserfreie Produkte, obwohl gegebenenfalls an Stelle von festen Produkten auch wässrige Lösungen von Amidosulfonsäure bzw. Ammoniumsulfamat in Schritt c) verwendet werden können.

Die Zugabe von Amidosulfonsäure bzw. Ammoniumsulfamat dient dazu, flammhemmende Eigenschaften bei gleichzeitig weichem Griff von Textilien zu erzielen.

Schritt d):

Falls die nach Durchführung von Schritt c) erhaltene Mischung einen pH-Wert im Bereich von 4,5 bis 6,5 bei 20°C aufweist, so wird Schritt d) nicht durchgeführt. Liegt der pH-Wert außerhalb dieses Bereichs, so muß Schritt d) durchgeführt werden, nämlich eine Einstellung des pH-Werts auf einen Wert im Bereich von 4,5 bis 6,5 bei 20°C. Ist der pH-Wert nach Durchführung von Schritt c) niedriger als 4,5, so erfolgt dessen Korrektur in Schritt d) vorzugsweise durch Zugabe von Ammoniak. Hierzu kann gasförmiges $NH_3$ in die Mischung eingeleitet werden. Vorteilhafter ist jedoch das Hinzufügen einer wässrigen $NH_3$-Lösung, z.B. einer Konzentration von 20 bis 25 Gew%.

Schritt e):

Der nach Durchführung von Schritt c) und gegebenenfalls Schritt d) erhaltenen Mischung wird in Schritt e) Ammoniumsulfat hinzugefügt. Hierbei werden pro 100 g der Mischung 20 bis 40 g Ammoniumsulfat verwendet. Diese Mengenangabe ist auf festes, wasserfreies Ammoniumsulfat bezogen. Dieses Salz kann in fester Form oder in Form einer wässrigen Lösung der Mischung hinzugefügt werden.

Die Zugabe von Ammoniumsulfat übt einen vorteilhaften Einfluß auf die flammhemmenden Eigenschaften von textilen Fasermaterialien aus, welche mit erfindungsgemäßen Zusammensetzungen behandelt wurden, insbesondere textilen Flächengebilden aus Polyesterfasern.

Nach Zugabe von Ammoniumsulfat kann die erhaltene Mischung, wenn gewünscht, mit Wasser verdünnt werden.

Am Ende von Schritt e) wird vorzugsweise die erhaltene Mischung gerührt, gegebenenfalls bei erhöhter Temperatur, bis eine klare Lösung entstanden ist.

Die nach Schritt e) erhaltene Zusammensetzung kann, gegebenenfalls nach Verdünnung mit Wasser, für die flammhemmende Ausrüstung textiler Flächengebilde verwendet werden. Es können aber auch vor der Verwendung weitere Produkte hinzugefügt werden, wie sie für die Textilausrüstung bzw. -veredelung dem Fachmann bekannt sind. Vorzugsweise jedoch enthalten erfindungsgemäße Zusammensetzungen bei ihrer Verwendung keine weiteren stickstoff- oder phosphorhaltigen Produkte außer den oben genannten, mit Ausnahme von Harnstoff. Außerdem ist es bevorzugt, wenn sie weder Borverbindungen noch Halogenverbindungen enthalten.

Vorteilhaft kann es in einer Reihe von Fällen sein, wenn nach Durchführung von Schritt e) der erhaltenen Mischung noch ein oder mehrere weitere Produkte zugesetzt werden. Diese Produkte sind ausgewählt aus Natriumacetat, Harnstoff und Natriumhydroxid. Pro 100 g der nach Schritt e) erhaltenen Mischung werden bevorzugt folgende Mengen eingesetzt, falls das betreffende Produkt überhaupt verwendet wird:

0,7 bis 1,3 g Natriumacetat
0,7 bis 1,3 g Harnstoff, sowie

Natriumhydroxid in einer solchen Menge, dass die resultierende Zusammensetzung einen pH-Wert im Bereich von 5 bis 6,5 bei 20°C besitzt. Diese Mengenangaben beziehen sich auf feste, wasserfreie Produkte, obwohl die Produkte entweder in fester, reiner Form oder in Form wässriger Lösungen verwendet werden können. Es ist zweckmäßig, Natriumhydroxid nicht vor der Zugabe von Natriumacetat oder Harnstoff der Zusammensetzung hinzuzufügen, sondern erst danach.

Die Erfindung wird nachfolgend durch Ausführungsbeispiele veranschaulicht.

Beispiel 1

Herstellung einer erfindungsgemäßen Zusammensetzung.

Zu 375 kg entmineralisiertem Wasser werden 200 kg sekundäres Guanidinphosphat (hergestellt aus $H_3PO_4$ und Guanidincarbonat

$$H_2N\text{-}C(=NH)\text{-}\overset{\oplus}{N}H_3 \quad HCO_3^{\ominus}$$

im Molverhältnis 1:2) gegeben. Nach Zugabe von etwa 60 kg 80 %iger Orthophosphorsäure erhielt man eine klare Lösung vom pH-Wert 5,5. Zu dieser wurden 60 kg Amidosulfonsäure ($H_2N\text{-}SO_3H$) hinzugefügt. Anschließend wurde mit 46 kg 25 %iger wässriger Ammoniaklösung der pH-Wert auf einen Wert von 5,5 eingestellt. Nach Zugabe von 200 kg festem Ammoniumsulfat und Rühren wurde eine klare Lösung erhalten. Diese wurde mit 86 kg Wasser verdünnt. Es wurden anschließend 11 kg Natriumacetat und 11 kg Harnstoff zugegeben und erneut gerührt, bis eine klare Lösung entstanden war. Mittels Zugabe von wässriger Natriumhydroxidlösung wurde ein pH-Wert von etwa 5,5 eingestellt.

Beispiel 2

Die gemäß Beispiel 1 erhaltene Lösung wurde filtriert, um Reste an Verunreinigungen zu entfernen. Anschließend wurden textile Flächengebilde aus Fasermaterialien ausgerüstet.

Beispiel 2a) (erfindungsgemäß)

Polyestergewebe mit einem $m^2$-Gewicht von ca. 135 g wird in einer wässrigen Flotte, die aus 200 g der gemäß Beispiel 1 hergestellten Zusammensetzung pro Liter besteht, im Foulard so behandelt, dass eine Flottenaufnahme von ungefähr 75 %, bezogen auf das Textilgewicht, resultiert. Das Gewebe wird 10 Minuten bei 110°C getrocknet.

Beispiel 2b) (erfindungsgemäß)

Polyestergewebe mit einem $m^2$-Gewicht von ca. 270 g wird in einer wässrigen Flotte, die aus 200 g der gemäß Beispiel 1 hergestellten Zusammensetzung pro Liter besteht, am Foulard so behandelt, dass eine Flottenaufnahme von ungefähr 110 % bezogen auf das Textilgewicht, resultiert. Das Gewebe wird 10 Minuten bei 110°C getrocknet.

Beispiele 2c) und 2d) (nicht erfindungsgemäße Vergleichsbeispiele)

Die Beispiele 2a und 2b wurden wiederholt, wobei jedoch an Stelle der erfindungsgemäßen Zusammensetzung gemäß Beispiel 1 eine Vergleichszusammensetzung verwendet wurde. In den übrigen Bedingungen entsprach das Beispiel 2c) dem Beispiel 2a) und das Beispiel 2d) dem Beispiel 2b).
Die Vergleichszusammensetzung war eine bekannte flammhemmende Zusammensetzung in Form einer wässrigen Lösung, welche etwa 30 Gew% Ammoniumsulfamat, 5 Gew% Ammoniumsalz eines Orthophosphorsäuremethylesters, 2 Gew% Harnstoff und 6 Gew% Borax enthielt. Sie enthielt weder Guanidinphosphat noch Ammoniumsulfat.

An den 4 Gewebeproben der Beispiele 2a) bis d), wurden nach den in DIN 54336, Ausgabe November 1986, beschriebenen Methoden die Brennzeit, die Glimmzeit und die Einreißlänge (= Grad der Zerstörung) bestimmt. Die Ergebnisse zeigt die folgende Tabelle.

Tabelle

Beflammungszeit 3 Sek:

| | Beispiel 2a) | Beispiel 2c) |
|---|---|---|
| Brennzeit Sek | 0 | 19 |
| Glimmzeit Sek | 0 | 0 |
| Einreißlänge mm | 30 | 60 |

Beflammungszeit 15 Sek:

| | Beispiel 2a) | Beispiel 2c) |
|---|---|---|
| Brennzeit Sek | 0 | 15 |
| Glimmzeit Sek | 0 | 0 |
| Einreißlänge mm | 100 | 145 |

Beflammungszeit 3 Sek:

| | Beispiel 2b) | Beispiel 2d) |
|---|---|---|
| Brennzeit Sek | 3 | 16 |
| Glimmzeit Sek | 0 | 0 |
| Einreißlänge mm | 55 | 80 |

Beflammungszeit 15 Sek:

| | Beispiel 2b) | Beispiel 2d) |
|---|---|---|
| Brennzeit Sek | 0 | 0 |
| Glimmzeit Sek | 0 | 0 |
| Einreißlänge mm | 100 | 120 |

Aus diesen Werten ist ersichtlich, dass die erfindungsgemäßen Beispiele 2a) und 2b) zu besseren Ergebnissen führten als die Vergleichsbeispiele 2c) und 2d).

## Patentansprüche

1. Wässrige Zusammensetzung, herstellbar durch folgende, nacheinander ablaufende, Verfahrensschritte

   a) Herstellen einer Mischung aus Wasser und Guanidinphosphat, wobei die Mengenverhältnisse so gewählt werden, dass die Mischung einen Phosphorgehalt im Bereich von 4,0 bis 6,5 Gew% besitzt.
   b) Gegebenenfalls Einstellen des pH-Werts der Mischung auf einen Wert im Bereich von 4,5 bis 6,5 bei 20°C.
   c) Hinzufügen von Ammoniumsulfamat oder Amidosulfonsäure in einer solchen Menge, dass pro 100 g der nach Schritt b) erhaltenen Mischung 8 bis 12 g Amidosulfonsäure oder 9,5 bis 15 g Ammoniumsulfamat verwendet werden, oder Hinzufügen einer Mischung dieser beiden Produkte.
   d) Gegebenenfalls Einstellen des pH-Werts der erhaltenen Mischung auf einen Wert im Bereich von 4,5 bis 6,5 bei 20°C.
   e) Hinzufügen von Ammoniumsulfat in einer solchen Menge, dass pro 100 g der nach Schritt d) erhaltenen Mischung 20 bis 40 g Ammoniumsulfat verwendet werden.

2. Zusammensetzung nach Anspruch 1, **dadurch gekennzeichnet, dass** anschließend an Schritt e) noch ein Schritt f) durchgeführt wird, wobei in Schritt f) pro 100 g der nach Schritt e) erhaltenen Mischung 0,7 bis 1,3 g Natriumacetat
   und/oder
   0,7 bis 1,3 g Harnstoff
   und/oder
   Natriumhydroxid in einer solchen Menge, dass die erhaltene Mischung einen pH-Wert bei 20°C im Bereich von 5 bis 6,5 besitzt,
   der Mischung hinzugefügt werden.

3. Zusammensetzung nach Anspruch 1 oder 2, **dadurch gekennzeichnet, dass** in Schritt b) der pH-Wert mittels Zugabe von Phosphorsäure eingestellt wird.

4. Zusammensetzung nach einem oder mehreren der Ansprüche 1 bis 3, **dadurch gekennzeichnet, dass** in Schritt d) der pH-Wert mittels Zugabe von wässriger Ammoniaklösung eingestellt wird.

5. Verwendung einer Zusammensetzung gemäß einem oder mehreren der Ansprüche 1 bis 4 zur Behandlung von Fasermaterialien.

6. Verwendung nach Anspruch 5, **dadurch gekennzeichnet, dass** die Fasermaterialien textile Flächengebilde in Form von Geweben, Maschenware oder Vliesen (non-wovens) sind.

7. Verwendung nach Anspruch 5 oder 6, **dadurch gekennzeichnet, dass** die Fasermaterialien aus Polyesterfasern bestehen.

Europäisches Patentamt

# EUROPÄISCHER RECHERCHENBERICHT

Nummer der Anmeldung
EP 04 02 9751

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| D,A | GB 1 174 866 A (NITTO BOSEKI CO. LTD.) 17. Dezember 1969 (1969-12-17) * Seite 8, Zeile 16 - Zeile 25; Ansprüche 3,4 * ----- | 1-7 | D06M13/432 D06M13/453 D06M11/66 D06M11/55 D06M11/56 C09K21/00 |
| A | US 4 723 959 A (MIYAMICHI ET AL) 9. Februar 1988 (1988-02-09) * Spalte 3, Zeile 10 - Zeile 18; Anspruch 1 * ----- | 1-7 | |
| | | | RECHERCHIERTE SACHGEBIETE (Int.Cl.7) |
| | | | D06M C09K |

Der vorliegende Recherchenbericht wurde für alle Patentansprüche erstellt

| Recherchenort | Abschlußdatum der Recherche | Prüfer |
|---|---|---|
| Den Haag | 31. Oktober 2005 | Blas, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

3
EPO FORM 1503 03.82 (P04C03)

## ANHANG ZUM EUROPÄISCHEN RECHERCHENBERICHT ÜBER DIE EUROPÄISCHE PATENTANMELDUNG NR. EP 04 02 9751

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2005

| Im Recherchenbericht angeführtes Patentdokument | Datum der Veröffentlichung | Mitglied(er) der Patentfamilie | Datum der Veröffentlichung |
|---|---|---|---|
| GB 1174866 A | 17-12-1969 | BE 700351 A | 01-12-1967 |
| | | DE 1619126 A1 | 21-08-1969 |
| | | FR 1575519 A | 25-07-1969 |
| US 4723959 A | 09-02-1988 | JP 1468410 C | 30-11-1988 |
| | | JP 61113826 A | 31-05-1986 |
| | | JP 63014092 B | 29-03-1988 |

EPO FORM P0461

Für nähere Einzelheiten zu diesem Anhang : siehe Amtsblatt des Europäischen Patentamts, Nr.12/82